# EUROPEAN PATENT APPLICATION

(11) **EP 1 172 051 A2**
(43) Date of publication of application: **16.01.2002**
(21) Application number: 01305821.9
(22) Date of filing: 05.07.2001
(51) Int. Cl.: A47G 1/17, C09J 7/02

(54) **A mount**

(30) Priority: 14.07.2000 GB 0017374
(71) Applicant: API Tenza Limited, Saxmundham, Suffolk IP17 2NL (GB); MacAlister, John, Yoxford, Suffolk IP17 3HQ (GB)
(72) Inventor: MacAlister, John, Yoxford, Suffolk IP17 3HQ (GB); Malone, Peter, Saxmundham, Suffolk IP17 2NL (GB)
(74) Representative: Slingsby, Philip Roy

(57) **Abstract**

A plurality of mounts releasably adhered to a single sheet of a backing material, each mount being a mount for mounting paper to glass, and comprising a body having a first surface carrying an adhesive coating capable of adhering the mount to a sheet of paper to form a mountable arrangement, and a second surface capable of securing such a mountable arrangement directly to glass without adhesive.

## Description

This invention relates to a mount or plurality of mounts, each for temporarily mounting paper to smooth glass and other substrates such as smooth gloss surfaces and to a method for manufacturing said mount or plurality of mounts.

Most paper that is adhered to glass is in the form of notices that are to be found displayed temporarily in the windows of shops, such as local newsagents. Additionally, schools and other organisations frequently employ internal glazing, such as glazed partitions, for the display of materials like students' work and relevant notices. Elsewhere, notices may be found adhered to gloss, non-porous surfaces such as gloss-painted wood.

Papers such as notices are adhered either so that the face of the page is viewed through the glass - as in the case of shop windows - or may be adhered to the glass with the "back" of the notice to the glass or to a gloss surface. This invention relates to both cases.

Typically, an organisation or commercial office, which displays, on glass, notices of, for example, community or company activities, will employ means such as cut lengths of clear adhesive tape, or proprietary materials which can be formed into small "buds" and applied to the paper and which have adequate adhesion to the paper and glass or other material to which the paper is to be attached.

Existing materials and methods for the temporary application of sheets of paper to glass suffer from a number of disadvantages, most of which arise from the fact that these materials are not designed specifically with this application in mind.

The use of clear adhesive tapes involves cutting or tearing the tape to a suitable length and applying it to the paper with some part of the tape free to stick to the glass. The tape sticks permanently to the paper so that it is not reusable.

Over time, the tape generally deteriorates and discolours. Also, the adhesive will often be found to have hardened to the glass and the tape residue may be impossible to remove without cleaning chemicals. Most tapes used in these circumstances appear to leave, on the glass, either a very hard deposit, or a slimy gum, either of which is difficult to remove. The result of these effects is that over a period, the shop window or other glass pane or smooth surface used for notices, becomes soiled and marked. This will detract from the quality of the notice or other paper being displayed.

The use of tacky "buds" of mastic materials of a gummy nature such as "Blu-tack" (RTM) similarly involves preparing the material before use, in this case usually by tearing a suitably-sized piece from the stock and softening and shaping it to apply to the paper. The paper is then placed against the glass, with the bud of mastic between it and the glass. The mastic material then adheres to the glass. These materials are equally used to stick papers to surfaces with the back of the notice to the wall or other surface.

There are a number of disadvantages with this mastic type material besides the preparation for use.

First, when such materials are used on glass, they can be seen between the paper and the glass and they often detract from the appearance of the assembly. The use of these materials often causes the display of the notice or paper to be seen as more informal and "down-market" than it need be.

Again, over time, perhaps a few weeks, or, in direct sunlight, just a few days, the mastic material emits oily moisture that often stains the paper. The unsightly fixture or the stain can often be seen through the paper or other material.

Like the adhesive tapes, these wax-like materials leave deposits on the glass, which, if not cleaned off regularly, cause the glass pane to become unsightly. This affects also the appearance of notices or papers subsequently displayed there. This effect of deterioration increases overtime.

A further method of adhering sheets of paper to a substrate such as glass is known in the context of fixing a motor vehicle tax disk to the inside surface of the vehicle windscreen. An envelope is provided into which the vehicle tax disk is inserted. Around the edges of the envelope a border made from a plastics material is provided which is capable of adhering releasably to the vehicle windscreen when the border is pushed against the surface of the windscreen. The envelope must be large enough to hold the tax disk or other material and the border must have a sufficient surface area to provide adequate adhesion of the envelope to the windscreen. In other words, the envelope must be of a relatively large size.

For fixing materials or objects of a heavier weight than a sheet of paper to glass or other similar substrate, it is known to use "sucker pads" which are made from a plastics material. These pads have a hollow cup shape and usually are irreleasably attached to the material to be adhered to the substrate. Thus the pads form an integral part of the heavier weight material. The pads are attached to the heavier weight material during its manufacture. The cost incurred in making and attaching the pads is such that they are unsuitable for use for the temporary adhesion to a substrate of an inexpensive material such as a handwritten notice on a sheet of paper.

The present inventors have identified that, in view of the above, a problem exists to provide a method for cheaply, cleanly and simply mounting a lightweight material such as a sheet of paper to a substrate such as glass.

Accordingly, it is an aim of the present invention at least partially to address the above problem.

Accordingly, in a first aspect, the present invention provides a plurality of mounts releasably adhered to a single sheet of a backing material, each mount being a mount for mounting paper to glass, and comprising a body having a first surface carrying an adhesive coating capable of adhering the mount to a sheet of paper to form a mountable arrangement, and a second surface capable of securing such a mountable arrangement directly to glass without adhesive.

Furthermore, in a second aspect, the present invention provides:
(i) a mount for mounting paper to glass, comprising a body having a first surface carrying an adhesive coating capable of adhering the mount to a part of one surface of a sheet of paper to form a mountable arrangement and a second surface capable of securing such a mountable arrangement directly to glass without adhesive; where the first and second surfaces are mutually opposite; and
(ii) a mount for mounting paper to glass, comprising a body having a first surface carrying an adhesive coating capable of releasably adhering the mount to a sheet of paper to form a mountable arrangement and a second surface capable of securing such a mountable arrangement directly to glass without adhesive; where the first and second surfaces are mutually opposite.

The present invention further provides a method for making a plurality of mounts according to the first aspect of the present invention comprising the steps of (i) providing the backing material; (ii) applying an adhesive coating to a surface of the backing material; (iii) adhering releasably the mount material to the backing material; and (iv) forming the plurality of mounts from the mount material.

Also the present invention provides use of a mount for securing a first material to a second material, where the mount is part of the plurality of mounts according to the first aspect of the present invention or is a mount according to the second aspect.

The present invention at least partially addresses the above problem by providing a plurality of purpose-designed, high quality mounts for temporarily and cleanly mounting material such as paper to glass and other surfaces. The present mounts are preferably inexpensive and easy-to-use and preferably leave no marks on the glass or other surface (before or after removal from the surface) even after prolonged use.

It is envisaged that, normally, the plurality of mounts will be integrated with a dispenser. The dispenser may be in the form of a box known in the art, suitably adapted for the dispensing of the present mounts. Suitably, the plurality of mounts may be provided in the form of a roll.

As an alternative to integrating the plurality of mounts with a dispenser, they simply may be adhered to a flat sheet. Suitably, the sheet may have up to 30 mounts adhered to it. The sheet may be provided as part of a flat pack product provided with hanging means. Thus, the product may be hung from a rail for displaying the product in a shop, for example.

References to "a mount" or "the mount" may be taken to be references to a single mount in the plurality of mounts according to the first aspect of the present invention as well as a mount according to the second aspect of the present invention.

It will be appreciated that usually the first and second surfaces of the mount will be mutually opposite. In other words, they will be diametrically opposed. Consequently, in use, the mount usually will be located between the first and second material.

The second surface of the mount is capable of securing the mount to glass without an adhesive that is different from the mount material. For the purpose of the present invention, the phrase "without adhesive" means that the second surface is left uncoated. Mount-to-second material adhesion is achieved by the inherent 'cling' properties of the selected mount material. That is to say, the mount material per se that provides the mount with a structural form, at the same time, is capable of securing the mount to glass. Without wishing to be bound by theory, it is thought that in one embodiment, the high plasticiser content in the mount material, which gives it a high softness, enables very close contact between the mount and the second material. Air may be expelled or even eliminated from the space between the second surface of the mount and the second material.

Preferably, the second surface of the mount is flat. More preferably, the first and second surfaces of the mount are flat. For the purposes of the present invention, the term "flat" should be taken to mean substantially level, even or smooth at a macroscopic level.

The adhesive coating is used for the adhering of the mount to a first material such as a paper-based material. When the mount is integrated with a dispenser, suitably, the adhesive coating also may be used for releasably adhering the mount to the third or backing material contained within the dispenser.

In a first embodiment, the adhesive coating is a permanent adhesive coating. A preferred permanent adhesive composition for the first embodiment is formulated primarily for paper adhesion.

In a second embodiment, the attachment of the mount to the first material is releasable because the adhesive coating is temporary, "peelable" adhesive coating. Such an adhesive advantageously allows repositioning of the mount after attaching a corner and then lifting it clear. A preferred releasable adhesive composition for the second embodiment is formulated primarily for paper adhesion.

Preferably the mount is made from a flexible mount material.

More preferably, the mount is made from a plastics material. The preferred plastics material is polyvinyl chloride (PVC).

A particularly suitable material for use as the flexible mount material is a plastics material containing greater than 25 parts plasticiser, and preferably less than 80 parts plasticiser per 100 parts plastics material. This level of plasticiser is desirable as one way to achieve the properties of a mount according to this invention i.e. a mount having a second surface capable of securing the mount to glass without adhesive. It has been found that this property can be optimised by using at least 55 parts plasticiser per 100 parts plastics material. It has been found that this level of plasticiser has the effect of enabling a soft, smooth and pliable second surface. Without wishing to be bound by theory it is thought that, when pressed against the surface of a sheet of glass, substantially the whole of the second surface meets and lies flat against the surface of the sheet of glass. Air is expelled or even eliminated from the space between the second surface of the mount and the second material. This results in atmospheric pressure acting substantially on one side only of the mount. Additionally, the close contact between the surface of the mount and the surface of the glass generates an attraction at a molecular level.

Any suitable plasticiser which will be known to the skilled person may be used. Dioctyl phthalate is a preferred plasticiser. Accordingly, a preferred material for use as the flexible mount material is PVC containing at least 55 parts plasticiser, preferably at least 55 parts Dioctyl phthalate, per 100 parts PVC. This mount has been found to have an excellent cosmetic appearance because it is transparent and 'irons' down smoothly onto the second material such as glass.

Preferably, the mount is in the form of a sheet or leaf or a membrane or film. The gauge of the sheet or leaf or membrane or film should be selected so as to optimise the behaviour and effect of the mount e.g. to facilitate manipulation of the mount. Selecting the stiffness and other mechanical properties of the mount material enables mounting of the first material such as paper to the chosen second material. To some extent, the optimum gauge of the mount will be related to the nature of the mount material. In a preferred embodiment of the present invention the gauge of the mount is up to 2mm, more preferably up to 1mm, even more preferably between 0.10mm and 0.4mm or between 0.15mm and 0.4mm, even more preferably about 0.2mm. A mount having a gauge within these ranges balances economy of the amount of mount material used with ease of use.

By experiment it has been found that it is not necessary to use a mount of the same size (generally A4) as the first material such as paper which is to be adhered to the second material such as glass or other substrate. Smaller mounts were found to be able to support the weight of paper notices of size A4 and larger. The optimum size for attaching a first material the second material will depend to some extent on the chosen mount material and the chosen first and second materials. Generally, the mount may be capable of mounting, to a second material such as glass, a first material such as paper which has a larger surface than that of the mount *per* se. In such cases, in use, the mount will be adhered only to a part of one surface of the first material to form a mountable arrangement. Accordingly, in one preferred aspect of the present invention, particularly where the mount material comprises PVC, the second surface of the mount has a surface area of about from 100 to 900mm², preferably less than 400mm², more preferably about 320mm². Such mounts are of a size that allows easy manipulation of the mounts as well as ability to hold a common sized paper notice (A4 to A3 approximately) in place on the second material such as glass. Other variants may have a larger or smaller surface area.

It is envisaged that when each mount has a second surface area of about 18mm x 18mm, between two and four of the present mounts would need to be attached to a piece of A4 paper in order for the mounts to enable adhesion of the first material such as paper to the second material such as glass. Accordingly, in one embodiment the mount is capable of securing the mountable arrangement directly to glass without adhesive only in combination with one, two or three further mounts adhered to the same sheet of paper or other first material.

In one embodiment of the invention, the mount is transparent. Other variants may include pigmented mounts.

When the first or second surface of the present mount is flat, the surface may be any two dimensional shape. For example, the surface may be square or rectangular, with or without rounded corners, or it may be circular, or another simple shape.

In a further aspect of the present invention, there is provided a method for manufacturing a mount comprising the steps of providing a mount material, forming the mount as defined above from the mount material and applying a suitable adhesive coating to the first surface of the mount.

In the method for making a mount according to the present invention, a mount may be formed from the mount material by a cutting step. Conveniently, a plurality of mounts may be cut from a single piece of mount material in a single cutting step.

In accordance with one process for making the present mount, the mount material is partially or fully coated on the first surface with a coating of a suitable adhesive. The adhesive coating may be applied using a standard manufacturing technique. Such techniques would be well known to a person skilled in this art and include application with a bar-coating device or by spray nozzles.

The mount may be presented in appropriate numbers, with the first surface adhered releasably on a third backing material. The mount should be able to be removed manually from the backing material for use.

When the present mount is adhered releasably to a backing material, the mount may be adhered to the backing material either before or after it is cut from the mount material and after the adhesive coating is applied to the first surface of the mount material. Usually, the mount will be adhered to the backing material before it is cut from the mount material and after the adhesive coating is applied to the backing material.

Accordingly, in one embodiment of the present method, the method comprises a further step of releasably adhering a third, backing material of siliconised paper or other suitable material to the first surface of the mount material. The third material is in the form of a sheet although this is not essential. This step, of laminating the two materials, is carried out after application of the adhesive coating. This may be effected by applying pressure with rollers.

Advantageously, the present mount may be dispensed from a box device, for example a cardboard box device, which facilitates the separation of the mount from the backing material and the manipulation of the mount. The dispenser box may be a box known in the art and adapted for the dispensing of the mount.

Alternatively, the mounts, for example one or several mounts, may be adhered to small sheets of backing material from which the or each mount may be 'peeled' manually for use. Usually, a single small sheet will have up to 30 mounts preferably about 24 mounts, releasably adhered to it. A flat pack product as referred to above could include, for example, five of the small sheets.

The invention will now be described in more detail with reference to the accompanying drawings in which:
Figure 1 shows schematically a process for making the present mounts. The mount material 3 from which the mounts are cut and the backing material 1 from which the dispenser tape is cut are shown.
Figure 2 shows a length of dispenser backing material 1 to which the present mounts 5 may be adhered when the mounts are integrated with a dispenser. Two possible shapes for the present mount are shown.
Figure 3 shows the principle of the removal of the mounts from the dispenser backing material.
Figure 4 shows a use of the mount 5 for attaching temporarily a first material such as a paper-based material 7 to a second material such as a glass-based or vitreous-like material 8.

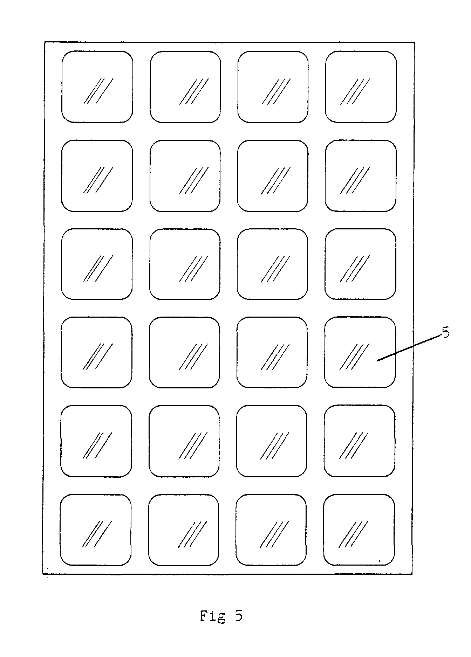

Figure 5 shows a plurality of mounts (5) releasably adhered to a sheet of backing material from which each mount may be 'peeled' manually for use.

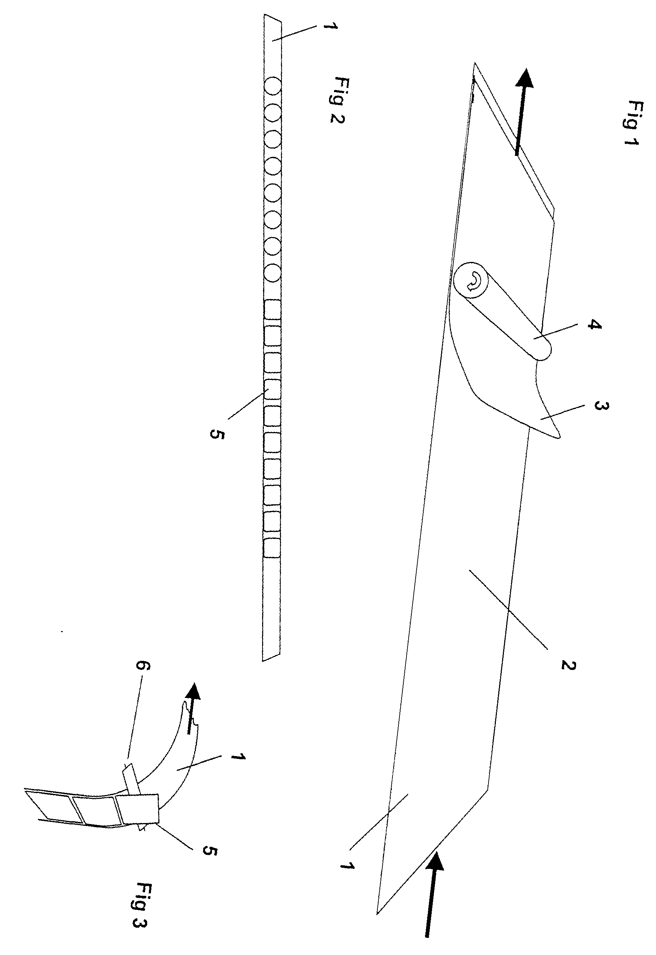

Figure 1 shows the backing material 1 to which an adhesive coating is applied at station 2 by a conventional coating method. The mount material 3 is then applied using rollers 4.

Figure 2 shows the shape of the mounts cut through the mount material whilst it is attached to the backing material. The mounts 5 are left adhered releasably to the backing material 1 while the off-cut matrix of mount material is removed.

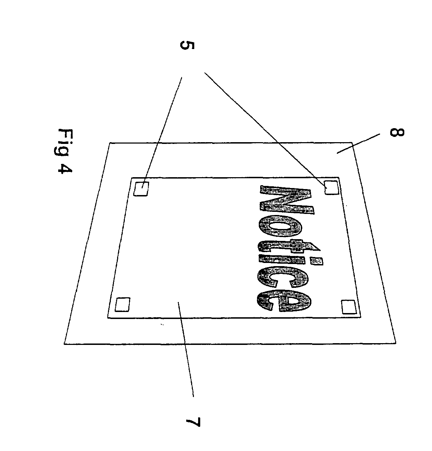

In Figure 3 the mounts 5, which are releasably adhered to the backing material 1, are made to peel away from the backing material by pulling the backing material through an opening in the dispensing device. The backing material is caused to be bent away from the mount and the mount is forced in a different direction to the direction of movement of the backing material. The device includes an edge that may be in the form of a blade or flat strip 6. The edge separates the slightly stiff mount 5 as it resists bending from the backing material 1. This type of separating action is known in the art in the context of separation of labels from a dispenser.

In Figure 4 the mount 5 is shown in use adhered to the first material, for example to a sheet of paper or other material 7. The second surface of the mount then is adhered to the second material 8, for example to glass or another substrate. This causes the paper or other material to be mounted to the glass or other substrates 8.

## Claims

1. A plurality of mounts releasably adhered to a single sheet of a backing material, each mount being a mount for mounting paper to glass, and comprising a body having a first surface carrying an adhesive coating capable of adhering the mount to a sheet of paper to form a mountable arrangement, and a second surface capable of securing such a mountable arrangement directly to glass without adhesive.

2. A plurality of mounts according to claim 1, provided in the form of a roll.

3. A plurality of mounts according to claim 1, provided in the form of a flat sheet.

4. A plurality of mounts according to any one of claims 1 to 3, wherein the first and second surfaces of each mount are mutually opposite.

5. A plurality of mounts according to any one of the preceding claims, wherein the first surface of each mount is capable of adhering the mount only to a part of one surface of the sheet of paper to form the mountable arrangement.

6. A plurality of mounts according to any one of the preceding claims, wherein each mount is capable of releasably securing the mountable arrangement directly to glass.

7. A plurality of mounts according to any one of the preceding claims, wherein the first or second surface of each mount is flat.

8. A plurality of mounts according to any one of the preceding claims, wherein each mount is flexible.

9. A plurality of mounts according to any one of the preceding claims, wherein each mount comprises a plastics material.

10. A plurality of mounts according to claim 9, wherein each mount further comprises a plasticiser.

11. A plurality of mounts according to claim 10, wherein each mount comprises at least 55 parts plasticiser per 100 parts plastics material.

12. A plurality of mounts according to any one of claims 9 to 11, wherein the plastics material is polyvinyl chloride.

13. A plurality of mounts according to any one of the preceding claims, wherein the thickness of each mount is up to 2mm.

14. A plurality of mounts according to claim 13, wherein the second surface area of each mount is in the range 100mm² to 900mm².

15. A plurality of mounts according to any one of the preceding claims, wherein the first or second surface of each mount is square, rectangular, triangular or circular.

16. A plurality of mounts according to any one of the preceding claims, wherein the second surface of each mount is not capable of adhering the mount to paper.

17. A plurality of mounts according to any one of the preceding claims, wherein the backing material includes silicone.

18. A plurality of mounts according to any one of the preceding claims, wherein each mount is transparent.

19. A plurality of mounts according to any one of claims 1 to 17, wherein each mount comprises a pigment material.

20. A device for dispensing a mount including a plurality of mounts as defined in any one of claims 1 to 19.

21. A method for making a plurality of mounts as defined in claim 1 comprising the steps of:
(i) providing the backing material;
(ii) applying an adhesive coating to a surface of the backing material;
(iii) adhering releasably the mount material to the backing material; and
(iv) forming the plurality of mounts from the mount material.

22. A method according to claim 21, wherein the plurality of mounts is formed in step (iv) by cutting.

23. A method according to claim 21 or 22, wherein the adhesive is applied in step (ii) by a roller or a spray nozzle.

24. A mount for mounting paper to glass, comprising a body having a first surface carrying an adhesive coating capable of adhering the mount only to a part of one surface of a sheet of paper to form a mountable arrangement and a second surface capable of securing such a mountable arrangement directly to glass without adhesive; where the first and second surfaces are mutually opposite.

25. A mount for mounting paper to glass, comprising a body having a first surface carrying an adhesive coating capable of releasably adhering the mount to a sheet of paper to form a mountable arrangement and a second surface capable of securing such a mountable arrangement directly to glass without adhesive; where the first and second surfaces are mutually opposite.

26. A mount according to claim 24 or claim 25, having the features as defined in any one of claims 7 to 18.

27. A mount according to any one of claims 24 to 26, wherein the first surface of the mount is adhered releasably to a backing material.

28. A mount according to any one of claims 24 to 27, wherein the entire surface of the mount is adhered to less than half of the area of a surface of a sheet of paper for permitting the sheet of paper to be mounted to glass.

29. Use of a mount as defined in any one of claims 24 to 28 for securing a first material to a second material.

30. Use of a mount according to claim 29, wherein the first material is a paper-based material.

31. Use of a mount according to claim 29 or 30, wherein the second material is a glass-based material.

32. Use of a mount according to any one of claims 29 to 31, wherein the second material has a smooth surface.
